Europäisches Patentamt

European Patent Office

Office européen des brevets

(11) Veröffentlichungsnummer: **0 385 948**
**A1**

## (12) EUROPÄISCHE PATENTANMELDUNG

(21) Anmeldenummer: 90810138.9

(51) Int. Cl.5: **B41F 13/18, B65H 27/00, F16C 13/00**

(22) Anmeldetag: 23.02.90

(30) Priorität: 02.03.89 CH 769/89

(43) Veröffentlichungstag der Anmeldung:
05.09.90 Patentblatt 90/36

(84) Benannte Vertragsstaaten:
CH DE ES FR IT LI NL

(71) Anmelder: HUBER & SUHNER AG KABEL-,
KAUTSCHUK-, KUNSTSTOFF-WERKE
Tumbelenstrasse 20
CH-8330 Pfäffikon ZH(CH)

(72) Erfinder: Haldimann, Walter
Rainstrasse 8
CH-8330 Pfäffikon(CH)
Erfinder: Siebenmann, Dieter
Schnallerweg 5
CH-8332 Russikon(CH)
Erfinder: Graf, Rudolf
Hörnlistrasse 38
CH-8330 Pfäffikon(CH)

(74) Vertreter: Hepp, Dieter et al
Hepp, Wenger & Partner AG Marktgasse 18
CH-9500 Wil(CH)

(54) Walze zur Druckbehandlung von bahnförmigen Materialien, Verwendung eines bandförmigen Flächengebildes zum Herstellen eines Trägerrohrs und Verwendung eines Trägerrohrs aus faserverstärktem Kunststoff.

(57) Eine Walze (1) zur Druckbehandlung von bahnförmigen Materialien besteht aus einem Trägerrohr (2), das mit einem elastischen Belag (3) versehen ist. Das Trägerrohr (2) ist aus faserverstärktem Kunstharz gefertigt. Die Fasern weisen eine spezifische Steifigkeit von mehr als 6.000 km auf und sind längssteif bezogen auf die Längsachse (X) des Trägerrohrs (2) gewickelt. Besonders vorteilhaft ist die Verwendung eines Trägerrohrs aus faserverstärktem Kunststoff mit einer Biege-Eigenfrequenz von wenigstens 200Hz und vorzugsweise über 250Hz bei einer Walze zur Druckbehandlung für bandförmige Materialien.

Fig.1

EP 0 385 948 A1

# Walze zur Druckbehandlung von bahnförmigen Materialien, Ver-wendung eines bandförmigen Flächengebildes zum Herstellen eines Trägerrohrs und Verwendung eines Trägerrohrs aus faserverstärktem Kunststoff

Die Erfindung betrifft eine Walze zur Druckbehandlung von bahnförmigen Materialien insbesondere einen Biegepresseur zum Anpressen an den Druckzylinder bei Tiefdrucksystemen mit einem Trägerrohr, welches mit mit einem elastischen Belag versehen ist, sowie die Verwendung eines bandförmigen, textilen Flächengebildes aus hochsteifen Fasern zum Wickeln eines Trägerrohrs.

Derartige Walzen finden in der Druckindustrie vor allem als Presseur-Walzen, ausgebildet als Biegepresseure Anwendung, um möglichst gleichmässiges Anpressen einer Bahn gegen eine Gegenwalze zu gewährleisten. Dies ist vor allem bei Rotationsdruckmaschinen der Fall, wo verhältnismässig nachgiebige Formzylinder verwendet werden.

Als Durchbiegungsausgleichwalzen oder Presseure sind dabei vor allem aufwendige Konstruktionen z.B. gemäss DE-OS-25 22 657, DE-PS-1,411,327 oder US-PS-3,802,044 im Einsatz.

Andere bekannte Konstruktionen sehen vor, auf einem Trägerrohr aus Stahl ein Rohr aus glasfaserverstärktem Kunststoff aufzubringen, welches den elastischen Belag trägt. Solche Walzen werden z.B. unter der Bezeichnung Roto Speedwell System von der Firma Erminio Rossini & Figli Company, Mailand oder unter der Bezeichnung SUCOROLL von der Anmelderin vertrieben. Eine solche Walze ist auch in der europäischen Patentanmeldung 82810451.3 (EP-PS-0 083 301) der Anmelderin beschrieben.

Beim Stand der Technik wird also für derartige Walzen zwingend von einem Trägerrohr aus Stahl ausgegangen. Dies resultiert daraus, dass der Fachmann bisher offensichtlich davon ausgegangen ist, dass die geforderte Biege-Steifigkeit der Walzen nur Stahl als Material für das Trägerrohr zulasse. Ausserdem entsteht bei derartigen Walzen infolge der Walkarbeit im elastischen Belag eine erhebliche Erwärmung, von der man annahm, dass sie nur über metallische Trägerrohre abgeführt werden könne. Obwohl deshalb faserverstärkte Kunststoff-Rohre bereits bei solchen Walzen Anwendung fanden, wurden sie ausschliesslich als Grundlage für den elastischen Belag verwendet und auf ein Stahl-Trägerrohr aufgeschoben.

Auch der Einsatz von hochfesten Fasern, z.B. Kohlenstoff-Fasern wurde bisher aus den vorstehend beschriebenen Gründen für die Herstellung von Presseuren nicht in Erwägung gezogen. Dazu kommt, dass derartige hochfeste Fasern auch aus wirtschaftlichen Gründen bisher eine Anwendung für die Herstellung von Presseuren scheinbar nicht ratsam erscheinen liess.

Die Erfindung schlägt nun vor, das Trägerrohr aus einem faserverstärkten Kunstharz herzustellen dessen Verstärkungsfasern eine spezifische Steifigkeit von mehr als 6.000 km aufweisen, wobei die Fasern, bezogen auf die Längsachse des Trägerrohrs, längssteif gewickelt sind. Erfindungsgemäss soll also auf die Verwendung eines Stahlrohrs verzichtet werden. Es hat sich völlig überraschend ergeben, dass mit derartigen Walzen wesentlich höhere Drehzahlen gefahren werden können, als mit Walzen, die auf einem Stahlrohr aufgebaut sind. Dies wird erreicht, obwohl die Steifigkeit des Rohrs geringer ist, als die Steifigkeit eines vergleichbaren Stahlrohrs. Ueberraschenderweise wird also erfindungsgemäss gezeigt, dass diese geringere Steifigkeit nicht nachteilig ist, was im Hinblick auf die gestellte Aufgabe - nämlich die linienförmige Druckbehandlung oder Abstutzung möglichst ohne Durchbiegung des Trägerrohrs, überraschend ist. Dabei hat sich ge zeigt, dass die Verwendung eines Trägerrohrs aus faserverstärktem Kunststoff mit einer Biege-Eigenfrequenz von wenigstens 200Hz und vorzugsweise von über 250 Hz, für eine Walze zur Druckbehandlung bahnförmiger Materialien zu besonders ruhigem Lauf und damit gleichmässiger Druckverteilung über die gesamte Länge des Trägerrohrs bei hohen Drehzahlen bis zu 60.000 Umdrehungen pro Stunde führt. Erfindungsgemäss wird demnach ein Verlust an Steifigkeit des Trägerrohrs zugunsten einer Erhöhung der Biege-Eigenfrequenz in Kauf genommen, was nicht zu der erwarteten Verschlechterung, sondern zu einer völlig überraschenden Verbesserung der Anpresseigenschaften bei hohen Drehzahlen führt. (Die Biege-Eigenfrequenz berechnet sich dabei nach der Formel: $f = \frac{1}{2} \cdot \pi \sqrt{\frac{c}{m}}$ wobei die in der Formel verwendeten Zeichen folgende Bedeutung haben:

1:

f = Biegeeigenfrequenz in Sek. $^{-1}$[Hz]

c = Biegesteife des Presseurs [N/m]

m = Masse des Biegepresseurs in [kg]

Folgende Fasern sind für die Realisierung der Erfindung besonders geeignet: Carbonfasern und Aramidfasern.

Diese Fasern weisen eine spezifische Steifigkeit von 6.000 km bis 20.000 km auf. Die spezifische Steifigkeit berechnet sich dabei wie folgt:

$$\text{Spez. Steifigkeit} = \frac{E}{s \cdot g}$$

(E ist dabei der Elastizitätsmodul im N/m²; ρ ist die Dichte in kg/dm³; g ist die Erdbeschleunigung mit 9,81 m/s²)

Die Erfindung schlägt gemäss Anspruch 1 eine längssteife Wicklung der Fasern bezogen auf die Längsachse des Trägerrohrs vor. Darunter ist zu verstehen, dass die Fasern vorwiegend parallel zur Längsachse des Trägerrohrs orientiert sind und nicht etwa radial oder in Umfangsrichtung. Dabei soll die Mehrzahl der Fasern bezogen auf die Längsachse des Trägerrohrs unter einem Winkel von weniger als 30° verlaufen, um gute Längssteifigkeit zu erzielen. Besonders gute Werte lassen sich dabei erreichen, wenn der Winkel kleiner als 6°, oder im Fall besonderer Steifigkeitsanforderungen kleiner als 3° ist. Besonders gute Andruckeigenschaften bei hohen Drehzahlen lassen sich erreichen, wenn das Trägerrohr bei einer Länge von 2m bis 4m einen Aussendurchmesser von 150mm bis 300mm aufweist und wenn die Dicke des faserverstärkten Bereichs der Rohrwand wenigstens 15mm beträgt.

Die Fasern lassen sich dabei als kontinuierliche Faserbündel über die gesamte Länge des Rohrkörpers wickeln und dabei spannen.

Die Herstellung lässt sich erfindungsgemäss jedoch weiter vereinfachen, wenn die Fasern bandförmig in überlappend gewickelten Abschnitten auf das Trägerrohr aufgewickelt sind. Erfindungsgemäss soll dabei vor allem ein aus den umschriebenen Verstärkungsfasern erzeugtes textiles Flächengebilde in Form eines Bands Verwendung finden, wobei wenigstens 70% der Querfasern oder der Kettfasern (sofern es sich um ein Gewebe handelt) in Querrichtung des Bands verlaufen. Ein solches Flächengebilde bzw. ein solches Band lässt sich beliebig weben oder auf andere Weise binden, wobei erfindungsgemäss in erster Linie der in Querrichtung des Bands verlaufende Faseranteil von 70% oder vorzugsweise 85 bis 90% betragen sollen. Dadurch lässt sich erreichen, dass beim Wickeln des Bands auf das Trägerrohr die in Querrichtung angeordneten Fasern, die im gewickelten Zustand etwa parallel zur Längsachse des Trägerrohrs verlaufen, den überwiegenden Faser-Anteil bilden und die Längssteifigkeit verbessern. Dabei können die Querfasern im Band vorzugsweise unter einem solchen Winkel zur Längsachse des Bands angeordnet werden, dass die Wickelschräge des Bands auf dem Trägerrohr kompensiert wird und damit die Querfasern nach dem Aufwickeln etwa achsparallel mit dem Trägerrohr verlaufen.

Als Fasern eignen sich besonders Kohlenstoff-Fasern mit einer spezifischen Steifigkeit grösser 6.000 km.

Besonders vorteilhaft lässt sich die Erfindung realisieren, wenn das Trägerrohr zwischen dem elastischen Belag und der faserverstärkten Schicht wenigstens eine Zwischenschicht aufweist. Diese Zwischenschicht kann vorzugsweise aus dem gleichen Kunstharz gebildet werden, aus dem die faserverstärkte Schicht besteht. Durch die Zwischenschicht lässt sich aber erreichen, dass bei einer Oberflächenbehandlung des Trägerrohrs, z.B. im Zusammenhang mit einem Neuauftragen des elastischen Belags, die Längsfasern nicht beschädigt und damit die Steifigkeit des Trägerrohrs beeinflusst wird.

Die Erfindung ermöglicht also auf optimal einfache Weise eine drastische und unerwartete Verbesserung von auf Torsion, Biegung und Druck beanspruchten Anpresswalzen vor allem im Hochgeschwindigkeitsbereich; sie ermöglicht ausserdem rationelle und wirtschaftliche Herstellung derartiger Walzen.

Die Erfindung ist im folgenden in Ausführungsbeispielen anhand der Zeichnungen näher erläutert. Es zeigen:

Figur 1 Die schematische Darstellung eines Biegepresseurs in Seitenansicht,

Figur 2 einen Teilschnitt durch die Wand einer Walze mit den Merkmalen der Erfindung,

Figur 3 die schematische Darstellung des Wickelverlaufs der Verstärkungsfasern auf einem Trägerrohr,

Figur 4 ein Trägerrohr mit abgewandelter Faser-Orientierung,

Figur 5 die schematische Darstellung der Verwendung eines bandförmigen Flächengebildes aus Verstärkungsfasern zum Wickeln eines Trägerrohrs.

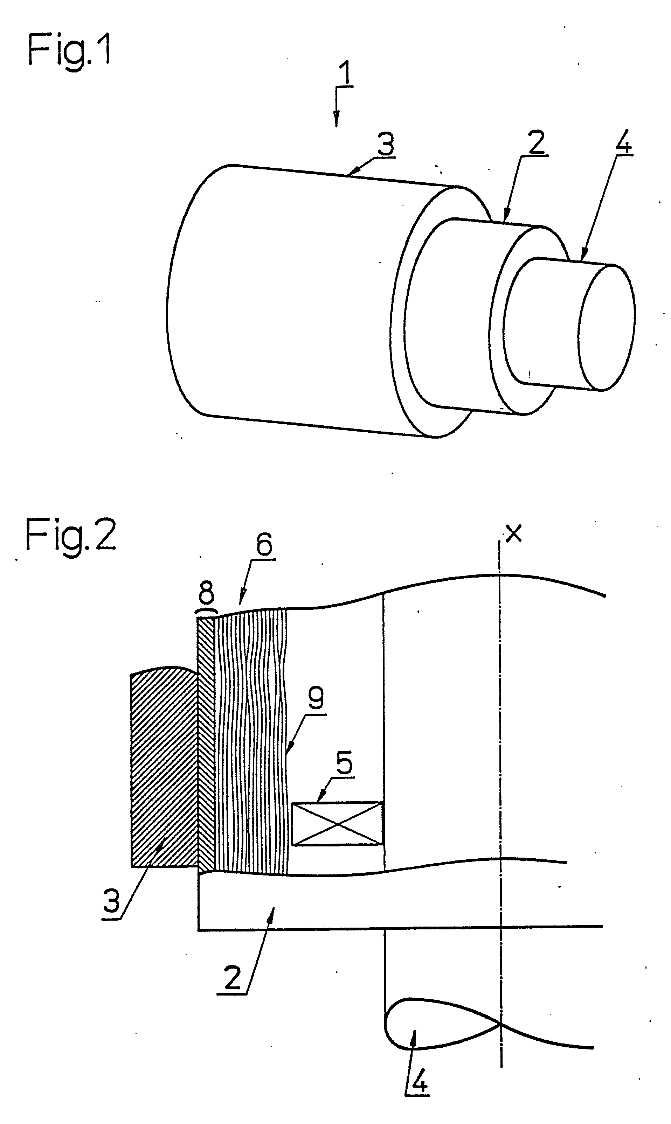

Gemäss Figur 1 besteht eine Walze 1, die insbesondere als Biegepresseur zum Anpressen eines Druckzylinders verwendet werden kann aus einem Trägerrohr 2 und einem elastischen Belag 3. Das Trägerrohr 2 wird durch nicht dargestellte Lagermittel auf einer Achse 4 in an sich bekannter Weise drehbar gelagert. Das Trägerrohr 2 kann dabei nur beidseitig oder aber auch mehrfach über seine Länge auf der Achse 4 gelagert sein.

Figur 2 zeigt einen Ausschnitt eines Trägerrohrs 2 im Teilschnitt, wobei Lager 5 zur Befestigung des Trägerrohrs 2 auf der Achse 4 angedeutet ist.

Die Wand des Trägerrohrs 2 ist mit einer Vielzahl von parallel zur Längsachse X des Trägerrohrs 4

3

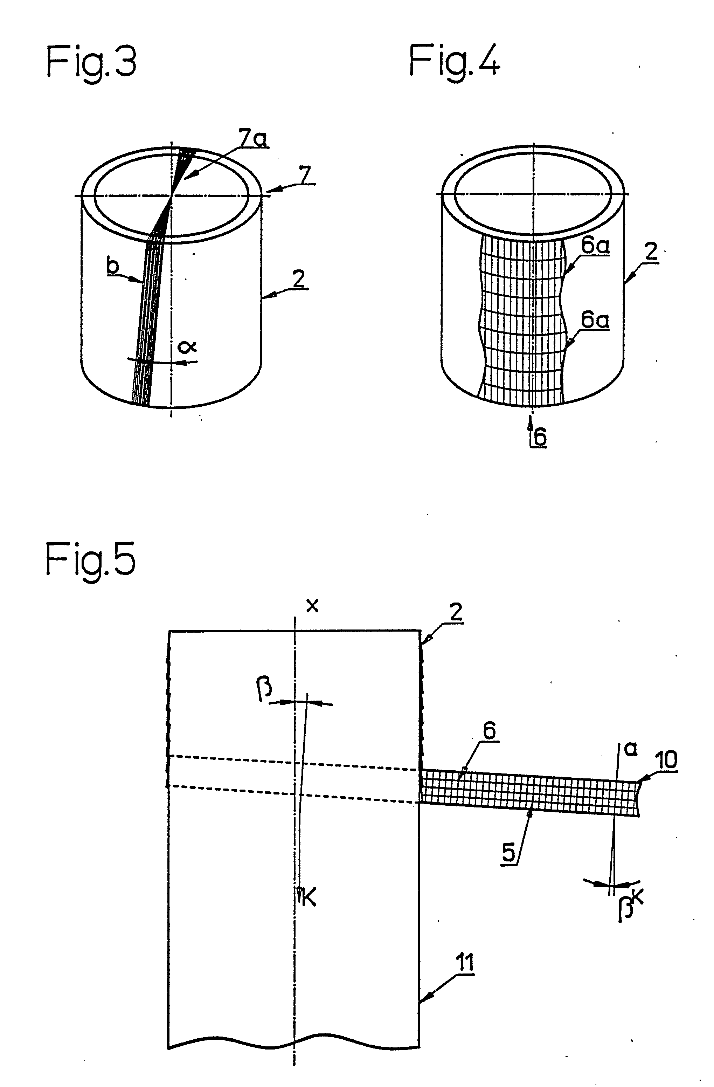

verlaufenden Kohlenstoff-Fasern verstärkt. Die Kohlenstoff-Fasern 6 sind dabei über den gesamten Umfang des Trägerrohrs 2 in Längsrichtung gewickelt. Die Wicklung erfolgt, wie in Figur 3 angedeutet, in der Praxis in bekannter Weise derart, dass ein mit Kunstharz getränktes Faserbündel oder eine Faser-"Schnur" in Längsrichtung auf einen langsam rotierenden Dorn gewickelt wird, wobei das Kunstharz aushartet. Das Trägerrohr 2 kann dann von einem solchen Dorn gelöst werden, nachdem die im Endbereich quer verlaufenden Fasern 7a entfernt wurden bzw. das Trägerrohr 2 im Endbereich 7 entsprechend gekürzt, z.B. abgesägt wurde.

Wie aus Figur 2 ersichtlich ist, befindet sich zwischen der mit Kohlenstoff-Fasern 6 verstärkten Wand 9 des Trägerrohrs 2 und dem Belag 3 eine Zwischenschicht 8, die nicht durch Fasern 6 verstärkt ist. Diese Zwischenschicht 8 besteht aus dem gleichen Kunststoff wie die Wand 9, doch ist sie nicht durch Fasern verstärkt. Dadurch wird erreicht, dass bei einer mechanischen Bearbeitung der Aussenwand des Trägerrohrs 2 keine der Fasern 6 zerstört wird, so dass die Steifigkeit des Trägerrohrs 2 durch eine solche Bearbeitung nicht beeinträchtigt wird.

Wie aus Figur 3 ersichtlich ist, verlaufen die Fasern 6 unter einem Winkel Alpha von etwa 3° zur Längsachse des Trägerrohrs 2. Dies gewährleistet optimale Steifigkeitseigenschaften.

Beim Ausführungsbeispiel gemäss Figur 4 sind die Fasern 6 sogar parallel zur Längsachse des Rohrs gewickelt; sie werden zusätzlich durch quer verlaufende Faserstränge 6a stabilisiert.

Figur 5 zeigt ein Ausführungsbeispiel bei dem ein Band 10, das aus Verstärkungsfasern 6 gebildet ist, spiralförmig auf einen Dorn 11 zu einem Trägerrohr 2 gewickelt wird. Das Band 10 kann dabei vor dem Wickeln in bekannter Weise mit Kunstharz getränkt werden. Es überlappt sich im Wickelbereich jeweils, so dass das Trägerrohr 2 nach dem Aushärten des Kunstharzes ein in Längsrichtung biegesteifes Rohr darstellt. Um die Biegesteifigkeit zu verbessern, wird ein Band 10 verwendet, bei welchem die Kettfäden K nur durch wenige Schussfäden S aus Fasermaterial gehalten werden. Der überwiegende Anteil der Fasern des Bands 10 ist demnach in Querrichtung zum Band 10, d.h. in Richtung K orientiert, so dass sich nach dem Aufwickeln auf dem Dorn 11 eine Orientierung des überwiegenden Anteils der Fasern in Richtung K, d.h. parallel zur Längsachse X des Trägerrohrs 2 ergibt. Die Richtung der Kettfäden verläuft dabei nicht absolut quer oder rechtwinklig zur Längsachse des Bands. Die Abweichung um den Winkel Beta, welcher der Wickelneigung des Bands 10 auf dem Dorn 11 entspricht, ermöglicht es, dass die Ausrichtung der Kettfäden K auf die Längsachse X des Trägerrohrs 2 praktisch vollständig möglich ist.

Eine Walze gemäss Figur 1 wurde unter Verwendung von Epoxiharz der Marke Ciba Geigy unter Verwendung von Kohlenstoff-Fasern T300 in einem Wickelverfahren gemäss Figur 3 hergestellt. Der Volumenanteil an Harz betrug dabei etwa 40%. Der Volumenanteil an Kohlenstoff-Fasern betrug 60%. Die Länge des Trägerrohrs war 2,6m bei einem Innendurchmesser von 180mm und einem Aussendurchmesser von 220mm . Auf dem Trägerrohr 2 befand sich ein Belag aus Polyurethanwerkstoff mit einer Dicke von 20mm und einem Elastizitätsmodul von ca. 25 N/mm$^2$.

Die derart hergestellte Walze hatte eine Biege-Eigenfrequenz von 300Hz vor der Beschichtung mit dem Belag 3 und von etwa 250Hz nach der Beschichtung. Die Walze wurde als Presseur bei einer Tiefdruckmaschine eingesetzt und mit Geschwindigkeiten bis zu 50.000 Umdrehungen pro Stunde erfolgreich gefahren.

Die Biege-Eigenfrequenz von 300Hz (unbeschichtet) und 250Hz (beschichtet) hat sich dabei als optimal erwiesen.

Ersichtlicherweise ist das hervorragende Anwendungsbeispiel für die Erfindung der Einsatz als Stütz- oder Druckwalze, vor allem im Zusammenhang mit Tiefdrucksystemen. Selbstverständlich sind aber auch andere Anwendungsfälle möglich, bei denen durch eine mit hoher Drehzahl rotierende Walze ein vorherbestimmbarer, linienförmiger Druck auf ein bahnförmiges Material oder auf eine Gegenwalze oder ein anderes Gegenstück übertragen werden soll.


## Ansprüche

1. Walze zur Druckbehandlung von bahnförmigen Materialien, insbesondere Biegepresseur zum Anpressen an den Druckzylinder bei Tiefdrucksystemen, mit einem Trägerrohr (2) welches mit einem elastischen Belag (3) versehen ist, dadurch gekennzeichnet, dass das Trägerrohr (2) aus einem faserverstärkten Kunstharz besteht, dessen Verstärkungsfasern (6) eine spezifische Steifigkeit von mehr als 6.000 km aufweisen und dass die Fasern (6) bezogen auf die Längsachse (X) des Trägerrohrs (2) längssteif gewickelt sind, wobei die Mehrzahl der Fasern (6) bezogen auf die Längsachse (X) des Trägerrohrs (2) unter einem Winkel von weniger als 30° verlaufen.

2. Walze nach Anspruch 1, dadurch gekennzeichnet, dass das Trägerrohr (2) etwa von 2m bis 4m lang ist, einen Aussendurchmesser von 150 bis 300mm aufweist, und dass die Dicke des faserverstärkten Bereichs der Rohrwand wenigstens 15mm beträgt.

3. Walze nach Anspruch 1 oder 2, dadurch gekennzeichnet, dass die Fasern (6) unter einem Winkel von weniger als 6° verlaufen.

4. Walze nach Anspruch 1 bis 3, dadurch gekennzeichnet, dass die Fasern (6) unter einem Winkel von weniger als 3° verlaufen.

5. Walze nach einem der vorangegangenen Ansprüche, dadurch gekennzeichnet, dass die Fasern (6) als kontinuierliche Faserbündel über die gesamte Länge des Trägerrohrs (2) gewickelt sind.

6. Walze nach einem der vorangegangenen Ansprüche 1 bis 4, dadurch gekennzeichnet, dass die Fasern (6) bandförmig in überlappenden Abschnitten auf das Trägerrohr (2) aufgewickelt sind.

7. Walze nach Anspruch 6, dadurch gekennzeichnet, dass die in Querrichtung des Bands (10) verlaufenden Querfasern oder Kettfasern (K) wenigstens 75% des Faseranteils des Bands (10) betragen.

8. Walze nach Anspruch 7, dadurch gekennzeichnet, dass die Querfasern oder Kettfasern (K) wenigstens 85 bis 90% des Faseranteils des Bands (10) betragen.

9. Walze nach einem der vorangegangenen Ansprüche, dadurch gekennzeichnet, dass Kohlenstoff-Fasern mit einer spezifischen Steifigkeit von 6.000 km bis 20.000 km verwendet werden.

10. Walze nach einem der vorangegangenen Ansprüche, dadurch gekennzeichnet, dass das Trägerrohr (2) zwischen dem elastischen Belag (3) und der faserverstärkten Schicht (9) wenigstens eine Zwischenschicht (8) aufweist.

11. Walze nach Anspruch 10, dadurch gekennzeichnet, dass die Zwischenschicht (8) aus dem gleichen Kunstharzmaterial wie das Trägerrohr (2) besteht.

12. Verwendung eines bandförmigen, insbesondere textilen Flächengebildes (10) aus hochfesten Fasern (6) zum Wickeln eines Trägerrohrs (2) aus faserverstärktem Kunststoff, wobei der etwa quer zur Längsrichtung des Bands (10) verlaufende Anteil an Fasern (K) des Flächengebildes wenigstens 80% des Gesamtfaseranteils des Bands (10) beträgt.

13. Verwendung eines bandförmigen Flächengebildes nach Anspruch 12 wobei die Fasern (6) im wesentlichen aus Kohlenstoff-Fasern mit einer spezifischen Steifigkeit von 6.000 km bis 20.000 km bestehen.

14. Verwendung eines mit einem Belag (3) versehenen Trägerrohrs (2) aus faserverstärktem Kunststoff mit einer Biege-Eigenfrequenz von wenigstens 200Hz und vorzugsweise von mehr als 250 Hz bei einer Walze zur Druckbehandlung bahnförmiger Materialien.

15. Verwendung einer Walze mit einem Trägerrohr gemäss Anspruch 14 als Biegepresseur für hochtourig laufende Drucksysteme.

5

## Fig.1

## Fig.2

Fig.3

Fig.4

Fig.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | US-A-3698053 (HESS ET AL.)<br>* das ganze Dokument *<br>--- | 1-15 | B41F13/18<br>B65H27/00<br>F16C13/00 |
| X | US-A-3593398 (HESS ET AL.)<br>* das ganze Dokument *<br>--- | 1-15 | |
| A | BE-A-901753 (SIGRI ELEKTROGRAPHIT GMBH.)<br>* das ganze Dokument *<br>--- | 1-11 | |
| A | DE-A-3525045 (PAUL SAUER DRUCKWALZENFABRIKEN)<br>* das ganze Dokument *<br>--- | 1-11 | |
| A | DE-A-3035117 (DAINIPPON SCREEN MANUFACTURING CO.,LTD.)<br>* Seiten 1 - 2 *<br>--- | 1-11 | |
| A | US-A-4301727 (BARDIN)<br>* Spalten 1 - 6; Figuren 1-7 *<br>----- | 1-11 | |

| | RECHERCHIERTE SACHGEBIETE (Int. Cl.5 ) |
|---|---|
| | B41F<br>B65H<br>F16C |

Der vorliegende Recherchenbericht wurde für alle Patentansprüche erstellt

| Recherchenort | Abschlußdatum der Recherche | Prüfer |
|---|---|---|
| DEN HAAG | 20 APRIL 1990 | DIAZ-MAROTO V. |

EPO FORM 1503 03.82 (P0403)